# EUROPEAN PATENT SPECIFICATION

(11) **EP 0 417 322 B1**
(45) Date of publication and mention of the grant of the patent: **17.01.1996**
(21) Application number: 90905633.5
(22) Date of filing: 30.03.1990
(51) Int. Cl.: B29C 45/56, B29C 45/70, C08G 63/60, C08G 63/06, B29L 17/00

(54) **MOLDING METHOD OF MAGNETIC DISC SUBSTRATE**
GIESSVERFAHREN EINES SUBSTRATS FÜR EINE MAGNETISCHE PLATTE
PROCEDE DE MOULAGE D'UN SUBSTRAT DE DISQUE MAGNETIQUE

(30) Priority: 31.03.1989 JP 78165/89
(43) Date of publication of application: 20.03.1991
(73) Proprietor: NIPPON PETROCHEMICALS COMPANY, LIMITED, Tokyo (JP)
(72) Inventor: KAMIYA, Takeshi, Kanagawa 247 (JP); TANAKA, Kenji, Kanagawa 229 (JP); KAWAGUCHI, Atsushi, Chiba 270-01 (JP); INOUE, Kenji, Kanagawa 233 (JP)
(74) Representative: Cropp, John Anthony David
(86) International application number: JP9000438
(87) International publication number: WO9011879

(56) References cited:
- EP-A- 0 047 387
- EP-A- 0 239 036
- EP-A- 0 263 043
- EP-A- 0 273 646
- JP-A- 0 625 824
- JP-A- 5 477 691
- JP-A- 5 951 915
- JP-A-60 110 419
- JP-A-61 241 115

## Description

### (Field of Art)

The present invention relates to a method for producing a fixed type magnetic disc substrate which is one of external memories of a computer.

### (Background Art)

On the surface of a magnetic disc substrate is formed a magnetic material layer, in which is recorded in high density a binary-coded information like "0" and "1". For this recording, it is required for the disc to have a smooth surface, and the presence of a very small flaw or impurity causes an error at the time of writing or reading of a signal. As materials which satisfy the above requirement, aluminum alloys have mainly been used so far. However, aluminum alloys are disadvantageous in that their cost is high due to the large number of manufacturing steps that are required. A further disadvantage is that as the discs are formed from metal, they are heavy and a large torque motor is required to drive the disc.

A magnetic disc substrate using a thermoplastic resin (polyether-imide) is also known. But this disc involves a problem in point of heat resistance when subjected to a heat treatment for coating the surface thereof with a magnetic material layer. Also, the surface roughness is conspicuous due to its inferior heat resistance.

For the purpose of solving the above-mentioned problems, U.S. Patent No. 4,726,998 proposes a substrate layer constituted by a sheet of a composition containing as a main component a polymer which forms an anisotropic melt phase. However, this substrate layer is a multi-axially oriented laminate of uniaxially oriented products, so the manufacturing cost is high and such substrate layer is not always considered suitable for industrialization.

In Japanese Patent Laid Open No. 249620/86 there is disclosed a magnetic disc which uses a resinous substrate formed from a polymer capable of forming an anisotropic melt. Only an injection molding method is described there-in as a molding method. However, even if this type of polymer is subjected to injection molding, the resulting molded article is conspicuous in the surface roughness thereof, or strain remains, and thus a fully satisfactory molded article is not obtained.

EP-A-0263045 also discloses a magnetic disc formed by a conventional injection molding technique from a thermotropic polymer in the absence of fillers.

According to experiments made by the present inventors, if various resins, including the foregoing polyether polyimide resins, as well as resins used for optical disc substrates such as polycarbonates and polymethacrylates, are molded by a mere conventional injection molding method, there can easily be obtained molded articles whose surfaces are smooth.

In the case of a thermotropic liquid crystal polymer having an oxybenzoyl group, a mere injection molding will not afford a satisfactory molded article.

It is presumed that such phenomenon is caused by the following fact.

When any of the foregoing resins such as polycarbonates and polymethacrylates is injected into the cavity of a mold, the injected molten resin flows while filling the interior of the cavity until the front end thereof reaches the inner part of the cavity and stops moving, whereupon the filling is completed. In this state, there is scarcely any flow mark on the surface of the resulting molded article. This means that the surface of the moded article is smooth. Therefore, as long as injection molding is adopted, the use of these polymers will scarcely cause any problem. Further, in the case of an optical disc or a magneto-optic disc, it is sufficient for the surface thereof to be somewhat smooth, aside from optical distortion of the substrate interior, with no direction influence exerted on signal noise (S/N ratio).

In the case of a thermotropic liquid crystal polymer having an oxybenzoyl group, when a molten resin thereof flows through the cavity of a mold, the moving front end thereof does not fill the cavity. However, the reason for this is unknown.

Inevitably, therefore, flow marks are apt to appear on the surface of the injection-molded article obtained, which marks cause surface roughening, independently of a later-described MFR.

The surface roughness caused by such flow marks is very fine, of the order of µm or less, and so scarcely causes any problem in molded articles for ordinary uses.

In the substrate for a fixed magnetic disc, however, even such surface unevenness gives rise to a serious problem. The reason is that smoothness in a strict sense is required because a magnetic head moves above the disc through a slight space.

On the other hand, thermotropic liquid crystal polymers typified by wholly aromatic polyesters having an oxybenzoyl group are specifically reduced in viscosity at a high shear rate under ordinary injection molding conditions and so it is easy to obtain thin discs by molding. For example, a magnetic disc substrate is a thin disc having an outside diameter of not larger than 300 mm and a thickness of not larger than 10 mm.

Therefore, the adoption of an injection molding method is preferable because of high productivity rather than adopting such a molding method as mere compression molding. It can even be said that according to the compression molding method, the use of the aforementioned thermotropic liquid crystal polymers makes it difficult to produce such a thin disc as the disc of the present invention in uniform shape and size and in large quantity.

The present invention solves the above-mentioned problems of the prior art and it is the object of the invention to provide a method for producing a magnetic disc substrate having heat resistance, light in weight, small in surface roughness and free of strain.

### (Disclosure of the Invention)

The present invention relates to a molding method for a magnetic disc substrate using a thermotropic liquid crystal polymer composition, which method comprises charging the said thermotropic liquid crystal polymer composition into a cavity of a disc-shaped mold having a smooth inner surface and held at a temperature of 100°C to 240°C, in a molten condition under a high shear rate, increasing the mold clamping pressure to pressurize the molten resin which is in contact with at least one disc face in the mold vertically through the said disc face, and thereafter cooling the resin, said thermotropic liquid crystal polymer composition containing a polymer or copolymer which contains the following repeating unit as a monomer unit, and a flat shaped inorganic filler: 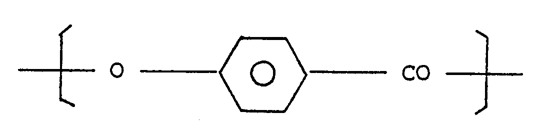
According to a second aspect of the present invention, there is provided A magnetic disc substrate formed from a thermotropic liquid crystal polymer composition containing a polymer or copolymer which contains the following repeating unit as a monomer unit and a flat shaped filler: 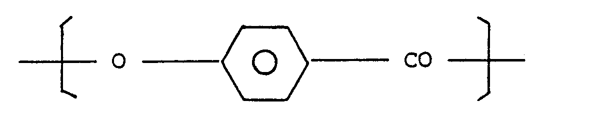
The "thermotropic liquid crystal polymer" as referred to herein indicates a thermoplastic meltable polymer which exhibits optical anisotropy in a molten condition. Such polymers which exhibit optical anisotropy upon melting have a property such that polymer molecular chains are arranged regularly in parallel in a molten condition. The property of an optically anisotropic melt phase can be confirmed by a conventional polarizing inspection method which utilizes an orthogonal polorizer.

The thermotropic liquid crystal polymer is prepared from a monomer having a plurality of chain extended linkages which are generally elongated, flat, high in rigidity along a molecular long chain and are either in a coaxial or parallel relation.

The following are mentioned as components of the polymer which forms an optically anisotropic melt phase as described above:
(A) at least one of aromatic dicarboxylic acids and alicyclic dicarboxylic acids;
(B) at least one of a aromatic hydroxycarboxylic acids;
(C) at least one of aromatic, alicyclic and aliphatic diols;
(D) at least one of aromatic dithiols, aromatic thiophenols and aromatic thiolcarboxylic acids;
(E) at least one of aromatic hydroxyamines and aromatic diamines.

In some case these components are used each alone, but in many cases are used in combination like (A) and (C); (A) and (D); (A), (B) and (C); (A), (B) and (E); or (A), (B), (C) and (E).

As examples of the above aromatic dicarboxylic acids (A1) there are mentioned such aromatic dicarboxylic acids as terephthalic acid, 4,4'-diphenyldicarboxylic acid, 4,4'-triphenyldicarboxylic acid, 2,6-naphthalenedicarboxylic acid, 1,4-naphthalenedicarboxylic acid, 2,7-naphthalenedicarboxylic acid, 2,7-naphthalenedicarboxylic acid, diphenyl ether-4,4'-dicarboxylic acid, diphenoxyethane-4,4'-dicarboxylic acid, diphenoxybutane-4,4'-dicarboxylic acid, diphenylethane-4,4'-dicarboxylic aicd, isophthalic acid, diphenyl ether-3,3'-dicarboxylic aicd, diphenoxyethane-3,3'-dicarboxylic acid, diphenylethane-3,3'-dicarboxylic acid, and 1,6-naphthalenedicarboxylic acid; as well as alkyl-, alkoxy- or halogen-substituted compounds of the aromatic dicarboxylic acids just exemplified above, such as chloroterephthalic acid, dichloroterephthalic acid, bromoterephthalic acid, methylterephthalic acid, dimethylterephthalic acid, ethylterephthalic acid, methoxyterephthalic acid, ethylterephthalic acid, methoxyterephthalic acid, and ethoxyterephthalic acid.

As examples of alicyclic dicarboxylic acids (A2) there are mentioned such alicyclic dicarboxylic acids as trans-1,4-cyclohexanedicarboxylic acid, cis-1,4-cyclohexanedicarboxylic acid, and 1,3-cyclohexanedicarboxylic acid, as well as alkyl-, alkoxy- or hologen- substituted compound of the clicyclic dicarboxylic acids just exemplified above.

As examples of aromatic hydroxycarboxylic acids (B) there are mentioned such aromatic hydroxycarboxylic acids as 4-hydroxybenzoic acid, 3-hydroxybenzoic acid, 6-hydroxy-2-naphthoic acid and 6-hydroxy-1-naphthoic acid, as well as alkyl-, alkoxy- or halogen-substituted compounds of aromatic hydroxycarboxylic acids, such as 3-methyl-4-hydroxybenzoic acid, 3,5-dimethyl-4-hydroxybenzoic acid, 2,6-dimethyl-4-hydroxybenzoic acid, 3-methoxy-4-hydroxybenzoic acid, 3,5-dimethoxy-4-hydroxybenzoic acid, 6-hydroxy-5-methyl-2-naphthoic acid, 6-hydroxy-5-methoxy-2-naphthoic acid, 2-chloro-4-hydroxybenzoic acid, 3-chloro-4-hydroxybenzoic acid, 2,3-dichloro-4-hydroxybenzoic acid, 3,5-dichloro-4-hydroxybenzoic acid, 2,5-dichloro-4-hydroxybenzoic acid, 3-bromo-4-hydroxybenzoic acid, 6-hydroxy-5-chloro-2-naphthoic acid, 6,-hydroxy-7-chloro-2-naphthoic acid, and 6-hydroxy-5,7-dichloro-2-naphthoic acid.

As examples of aromatic diols (C1) there are mentioned such aromatic diols as 4,4'-dihydroxydiphenyl, 3,3-dihydroxydiphenyl, 4,4'-dihydroxytriphenyl, hydroquinone, resorcinol, 2,6-naphthalenediol, 4,4'-dihydroxydiphenyl ether, bis(4-hydroxyphenoxy)ethane, 3,3'-dihydroxydiphenyl ether, 1,6-naphthalenediol, 2,2-bis(4-hydroxyphenyl) propane, and bis(4-hydroxyphenyl)methane, as well as alkyl-, alkoxy- or halogen-substituted compounds of aromatic diols, such as chlorohydroquinone, methylhydroquinone, t-butylhydroquinone, phenylhydroquinone, methoxyhydroquinone, phenoxyhydroquinone, 4-chlororesorcinol, and 4-methylresorcinol.

As examples of alicyclic diols (C2) there are mentioned such alicyclic diols as trans-1,4-cyclohexanediol, cis-1,4-cyclohexanediol, trans-1,4-cyclohexanedimethanol, cis-1,4-cyclohexanedimethanol, trans-1,3-cyclohexanediol, cis-1,2-cyclohexanediol, and trans-1,3-cyclohexanemethanol, as well as alkyl-, alkoxy- or halogen-substituted compounds of alicyclic diols, such as trans-1,4-(2-methyl)cyclohexanediol and trans-1,4(2-chloro)cyclohexanediol.

As examples of aliphatic diols (C3) there are mentioned such straight-chain or branched aliphatic diols as ethylene glycol, 1,3-propanediol, 1,4-butanediol and neopentyl glycol.

As examples of aromatic dithiols (D1) there are mentioned benzene-1,4-dithiol, benzene-1,3-dithiol, 2,6-naphthalene-dithiol, and 2,7-naphthalene-dithiol.

As examples of aromatic mercaptocarboxylic acids (D2) there are mentioned 4-mercaptobenzoic acid, 3-mercaptobenzoic acid, 6-mercapto-2-naphthoic acid, and 7-mercapto-2-naphthoic acid.

As examples of aromatic mercaptophenols (D3) there are mentioned 4-mercaptophenol, 3-mercaptophenol, and 6-mercaptophenol.

As examples of aromatic hydroxyamines and aromatic diamines (E) there are mentioned 4-aminopheol, N-methyl-4-aminophenol, 1,4-phenylenediamine, N-methyl-1,4-phenylenediamine, N,N'-dimethyl-1,4-phenylenediamine, 3-aminophenol, 3-methyl-4-aminophenol, 2-chloro-4-aminophenol, 4-amino-1-naphthol, 4-amino-4'-hydroxydiphenyl, 4-amino-4'-hydroxydiphenyl ether, 4-amino-4'-hydroxydiphenylmethane, 4-amino-4'-hydroxydiphenyl sulfide, 4,4'-diaminophenyl sulfide (thiodianilline), 4,4'-diaminophenyl sulfone, 2,5-diaminotoluene, 4,4'-ethylenedianiline, 4,4'-diaminodiphenoxyethane, 4,4'-diaminodiphenylmethane (methylenediailine), and 4,4'-diaminodiphenyl ether (oxydianiline).

The thermotropic liquid crystal polymer used in the present invention can be prepared by any of various ester forming processes, including a melt acidolysis process and a slurry polymerization process, using any of the above-exemplified compounds.

As the thermotropic liquid crystal polymer used in the present invention there also may be used a polymer wherein part of one high molecular chain is constituted by a polymer segment forming an anisotropic melt phase and the remaining portion is constituted by a thermoplastic resin segment not forming an anisotropic melt phase. A composite of plural thermotropic liquid crystal polymers is also employable.

The thermotropic liquid crystal polymer used in the present invention is a (co)polymer which contains in the molecular structure thereof at least a monomer unit represented by the following general formula: 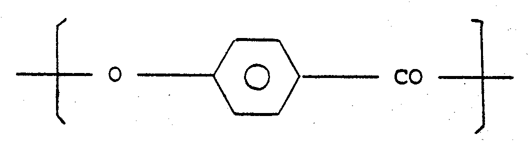
Examples are the following: 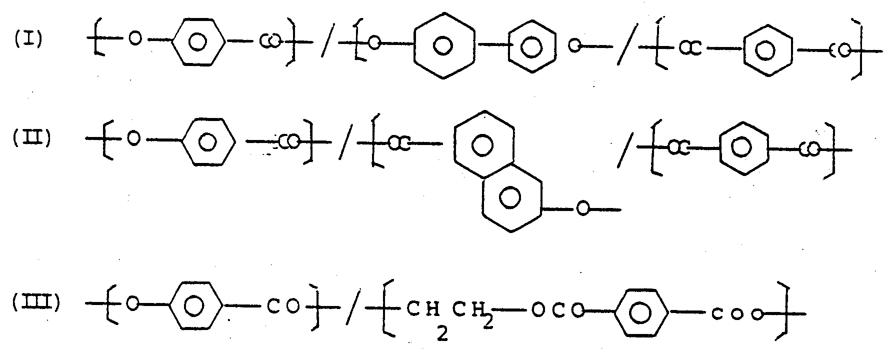
These polymers have superior properties such as high heat resistance and low shrinkage; besides, they are superior in processability.

It is preferable that the heat distortion temperature (hereinafter referred to as "HDT") of the thermotropic liquid crystal polymer used in the present invention be in the range of 220° to 350°C. HDT was measured according to the testing method defined by ASTM D648 and a bending stress was measured at 18.5 kg/cm².

If HDT is lower than 220°C, then at the time of baking a magnetic layer (at 200-250°C for 30-60 min) using an epoxy resin, the resin surface will be softened and become rough, or deformation will result.

If HDT is higher than 350°C, the molding temperature becomes too high, thus resulting in the deterioration of material and the formation of bubbles during molding.

It is preferred that the melt flow rate (hereinafter referred to as "MFR") of the thermotropic liquid crystal polymer used in the present invention be in the range of 1.0 to 50.0 (g/10 min).

MFR was determined at a test temperature of 360°C and a load of 2.16 kg, according to the testing method defined by ASTM D1238. Sample is used after drying at 180°C/24 hr.

If MFR is smaller than 1.0 (g/10 min), the molecular weight of the polymer will become too large, resulting in that an irregular flow is apt to occur in the mold and hence surface unevenness is easily developed in the form of flow mark. If MFR is larger than 50.0 (g/10 min), there will occur a partial flash in the intra-mold flow, resulting in that an uneven surface pattern is easily formed and the surface roughness becomes conspicuous.

Various additives may be incorporated in the thermotropic liquid crystal polymer used in the present invention. Examples of such additives include inorganic and organic fillers, stabilizers, antioxidants, ultraviolet ray absorbers, pigments, dyes and modifiers. Particularly, inorganic fillers are preferred for reducing the surface roughness. Examples of inorganic fillers include talc, mica, clay, sericite, calcium carbonate, calcium silicate, silica, alumina, aluminum hydroxide, calcium hydroxide, graphite, potassium titanate, glass fibers (GF), carbon fibers (CF), and various whiskers. The amount of additives, particularly inorganic fillers, which may be used in the range of 1 to 200, preferably 10 to 150, parts by weight per 100 parts by weight of the thermotropic liquid crystal polymer.

The inorganic fillers are in a flat shape. Inorganic fillers of this shape are very effective in reducing the surface roughness as compared with fibrous and spherical ones.

It is defined that such flat inorganic fillers have an aspect ratio of not smaller than 1 and a thickness of not larger than one half of length. Those ranging from 1 to 50 µm in average particle diameter are preferred.

Typical examples of such flat inorganic fillers are mica and talc.

The mold temperature at the time of molding the composition of the present invention containing the thermotropic liquid crystal polymer by an injection-compression molding method is preferably in the range of 100° to 240°C, more preferably 110° to 240°C, although it differs depending on the contents of the composition and the size of the resulting molded article.

If the mold temperature is lower than 100°C, the surface of the composition containing the thermotropic liquid crystal polymer will not be compatible with the mold, thus causing increase in the surface roughness of the resulting molded article. If the mold temperature is higher than 240°C, the composition in question will become difficult to harden. Thus, both such temperatures are not desirable.

In the present invention, the thermotropic liquid crystal polymer is charged in a molten condition into the cavity of a disc-shaped mold under a high shear rate. This operation and conditions therefore are the same as in the conventional injection molding of thermotropic liquid crystal polymers. For Example, the shear rate is in the range of 10³ to 10⁷ sec⁻¹.

The thermotropic liquid crystal polymer is injected to a central part of a disc-shaped mold, allowing the polymer to be fed radially from the central part, whereby there is attained uniform orientation and there is little strain caused by residual stress.

The smoothness of the inner surface of the disc-shaped mold is preferably not more than 10 mm in terms of surface roughness Rmax. A too rough surface is not desirable, of course, but the roughness of the mold inner surface does not affect the surface of the resulting molded article if only the mold inner surface is kept smooth to a certain degree or higher. In other words, even if the mold surface is very smooth, it is unavoidable for the molded article surface from the resin composition of the present invention to become rough as long as the conventional injection molding is performed. According to the present invention, however, extremely smooth molded articles can be mass-produced.

The injection molding in the present invention is carried out at a cylinder temperature in the range of 300°C to 500°C and an injection pressure in the range of 500 to 1,500 kgf/cm², using a conventional injection molding machine.

In the present invention, as noted previously, after the molten resin is charged into the mold cavity, the molten resin portion which is in contact with at least one disc surface in the mold is pressurized vertically by the said disc surface.

An injection molding cycle generally comprises a series of steps which are mold clamping - injection - keeping pressure - cooling - mold opening - ejection and taking out of molded article.

The pressurizing step (compression step) in the present invention is carried out in the above pressure keeping step.

The pressurized surface forms a surface of the resulting disc substrate as product, so by such operations there is obtained a substrate small in surface roughness and suitable as a magnetic disc substrate.

According to a concrete pressurizing method, after the molten resin is injected into the mold, a compressive force is applied, for example using a mold clamping pressure, to 5-20 vol% (based on the cavity volume) of cavity still remaining in the mold, and cooling is made.

According to another method, the mold is first closed under a somewhat low mold clamping pressure, then the molten resins injected into the mold at a filling pressure a little higher than the said mold clamping pressure, thereby causing the mold to be opened slightly (5-20 vol%), thereafter the mold clamping pressure is increased to complete mold clamping (compression), followed by cooling.

In the present invention it is desirable to adopt the former method, that is, the resin is charged to 5-20 vol% opening of the cavity volume in advance, followed by compression. More specifically, for example in the case of using a bisplit disc-shaped mold, the method of the present invention can be carried out by holding two molds through 5-20% spacing in the disc thickness direction, then charging the resin into this cavity and thereafter moving one or both molds to close the molds.

### (Industrial Utilizability)

The magnetic disc substrate thus obtained does not require such steps as heat-annealing and polishing unlike conventional aluminum alloys, thus permitting the reduction of cost. Besides, the substrate itself is corrosion-free, a long-term reliability is improved. Moreover, since the material of the substrate is smaller in specific gravity than aluminum alloys, it is possible to reduce the moment of inertia. As a result, it became possible to use a motor of a lower torque, i.e. a motor of a smaller size, than in the prior art. Further, coupled with the resulting in size or unnecessity of a cooling device, it became possible to reduce the size and weight of the entire magnetic memory. Additionally, the use of the resin composition of the present invention permits the production of injection-molded articles having smooth surfaces smaller in surface roughness, although it has been a common sense that injection-molded articles have rough surfaces.

The magnetic disc substrate produced by the method of the present invention preferably exhibits a small surface roughness of not more than 0.5 µm in terms of R_{MAX} (maximum width of surface concave or convex).

The specific resin used in the present invention is basically opaque and so is most suitable as a substrate for a recording element, e.g. a magnetic disc, wherein the radiation of light such as laser light is not performed from the substrate side. Thus, the disc of the present invention is applicable to an optical disc or a magneto-optic disc wherein the radiation of light is not performed from the substrate side.

### (Examples)

The present invention will be described below concretely in terms of working and comparative examples.

### Comparative Examples 1 - 2

Magnetic disc substrates (12.4 cm dia. by 1.2 mm thick) were produced each using a 50 wt% talc-contained grade (MFR = 19 (360°C/2.16 kg), HDT = 246°C (18.5 kg) of XYDAR (trade name, a product of Amoco Performance Products, U.S.A.), which is a terpolymer consisting of p-hydrobenzoic acid, biphenol and terephthalic acid, as a composition containing a thermotropic liquid crystal polymer, and also using an injection molding machine M70AII-DM (a product of Meiki Seisakusho) according to a conventional injection molding method without adopting a compression step.

High-speed injection was performed at a cylinder temperature of 370°C and an injection pressure of 1,000 kg/cm². Other conditions for the injection molding are as shown in table below. The surface corresponding to a magnetic film-applied surface of the mold was finished to R_{MAX} < 30 nm.

The surface roughness of each molded disc substrate was measured using a surface roughness meter, surftest 501 (a product of Mitsutoyo K.K.). R_{MAX} represents the maximum width of concave or convex and Rₐ represents a mean value of concaves and convexes.

The results obtained are as set forth in table below.

### Examples 1 - 3

The same bisplit mold as that used in Comparative Example 1 was used, but the mold was opened about 10 vol% in the thickness direction as allowance for compression in advance. The polymer was injected into this mold in the same way as in Comparative Example 1. Immediately thereafter, compression was made to an extent corresponding to the allowance for compression, followed by mold clamping and cooling in the same manner.

The resulting disc substrate were the same in shape and size as that obtained in Comparative Example 1. A magnetic layer of an epoxy resin was baked onto the surface of each disc substrate obtained, under the conditions of 230°C, 45 minutes, according to a conventional method. As a result, a change such as softening or increase of the surface roughness was not observed.

The results obtained are as shown in table below.

### Example 4

Injection molding was performed in the same way as in Comparative Example 1 except that a 45 wt% glass fiber-contained grade [MFR = 13 (360°C/2.16 kg), HDT = 268°C (18.5 kg)] of XYDAR (trade name, a product of Amoco Performance Products, U.S.A.) was used as a composition containing a thermotropic liquid crystal polymer. Onto the surface of the resulting substrate was baked a magnetic layer under the conditions of 230°C, 45 minutes, according to a conventional method. As a result, a change such as softening or increase of the surface roughness was not observed.

The results obtained are as set forth in table below.

### Comparative Example 3

Injection molding was performed in the same was as in Comparative Example 1 except that PEI (Polyether-imide, HDT = 210°C) was used in place of the composition containing a thermotropic liquid-crystal polymer. As a result, at the time of baking (230°C, 45 min) of a magnetic layer there occurred softening and increase of the surface roughness and strain was developed. It was impossible to satisfy the surface smoothness required.

| | | Material of Disc Substrate | Mold Temperature (°C) | Surface Roughness of Molded Article | |
|---|---|---|---|---|---|
| | | | | R_{MAX} | Rₐ |
| Comparative Example | 1 | Thermotropic liquid crystal polymer XYDAR*) (containing 50 wt% talc) | 100 | 1.66 | 0.21 |
| " | 2 | ditto | 120 | 1.04 | 0.15 |
| Example | 1 | ditto | 100 | 0.98 | 0.12 |
| | 2 | ditto | 120 | 0.35 | 0.06 |
| | 3 | ditto | 160 | 0.25 | 0.04 |
| Example | 4 | Thermotropic liquid crystal Polymer 45 wt% glass fiber) | 160 | 0.65 | 0.10 |

| | | | | | |
|---|---|---|---|---|---|
| *) Trade name, a product of Amoco Performance Products, U.S.A. | | | | | |

## Claims

1. A molding method for a magnetic disc substrate using a thermotropic liquid crystal polymer composition, which method comprises charging the said thermotropic liquid crystal polymer composition into a cavity of a disc-shaped mold having a smooth inner surface and held at a temperature in the range of 100°C to 240°C, in a molten condition under a high shear rate, increasing the mold clamping pressure to pressurize the molten resin which is in contact with at least one disc face in the mold vertically through said disc face, and thereafter cooling the resin, said thermotropic liquid crystal polymer composition containing a polymer or copolymer which contains the following repeating unit as a monomer unit, and a flat shaped inorganic filler:

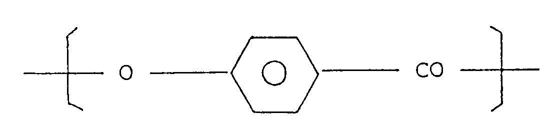

2. A magnetic disc substrate formed from a thermotropic liquid crystal polymer composition containing a polymer or copolymer which contains the following repeating unit as a monomer unit and a flat shaped filler:

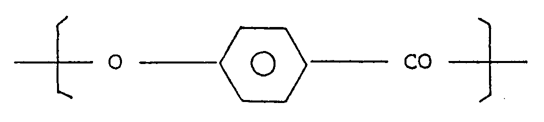

## Patentansprüche

1. Gießverfahren für ein Magnetplattensubstrat unter Verwendung einer thermotropen, flüssigkristallinen Polymerzusammensetzung, welches das Einfüllen der thermotropen, flüssigkristallinen Polymerzusammensetzung in geschmolzenem Zustand unter hohen Schergeschwindigkeiten in eine Aussparung einer scheibenförmigen, bei einer Temperatur im Bereich von 100 °C bis 240 °C gehaltenen Gießform mit glatter Innenoberfläche, das Erhöhen des Umklammerungsdrucks der Form, um auf das mit mindestens einer Plattenseite in Kontakt stehende, geschmolzene Harz senkrecht durch die Plattenfläche Druck auszuüben, und das anschließende Abkühlen des Harzes umfaßt, wobei die thermotrope, flüssigkristalline Polymerzusammensetzung ein Polymer oder Copolymer enthält, welches aus der folgenden wiederkehrenden Einheit als Monomereinheit und einem anorganischen Füllstoff mit flacher Form besteht:

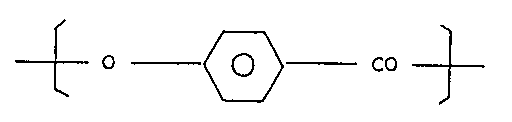

2. Magnetplattensubstrat, das aus einer thermotropen, flüssigkristallinen Polymerzusammensetzung gebildet wird, die ein Polymer oder Copolymer enthält, das aus der folgenden wiederkehrenden Einheit als Monomereinheit und einem Füllstoff mit flacher Form besteht:

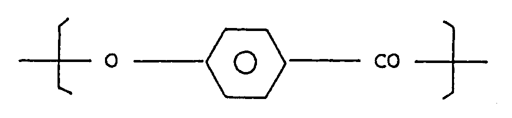

## Revendications

1. Procédé de moulage pour un substrat de disque magnétique utilisant une composition de polymère cristallin liquide thermotrope, lequel procédé comprend le chargement de cette composition de polymère cristallin liquide thermotrope dans une cavité d'un moule en forme de disque ayant une surface intérieure lisse et maintenu à une température comprise dans la gamme de 100°C à 240°C, à l'état fondu, sous un taux de cisaillement important, l'augmentation de la pression de serrage du moule pour mettre sous pression la résine moulée qui est en contact avec au moins une face du disque dans le moule, verticalement par l'intermédiaire de cette face du disque, et ensuite le refroidissement de la résine, cette composition de polymère cristallin liquide thermotrope contenant un polymère ou un copolymère qui contient l'unité répétée suivante comme unité monomère, et une charge inorganique de forme plate :

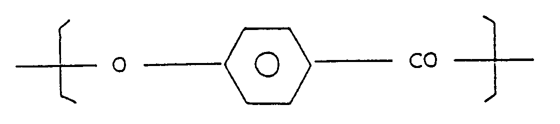

2. Substrat de disque magnétique formé à partir d'une composition de polymère cristallin liquide thermotrope contenant un polymère ou un copolymère qui contient l'unité répétée suivante comme unité monomère, et une charge de forme plate :
